(19) Europäisches Patentamt
European Patent Office
Office européen des brevets

(11) **EP 3 647 085 B1**

(12) **EUROPÄISCHE PATENTSCHRIFT**

(45) Veröffentlichungstag und Bekanntmachung des Hinweises auf die Patenterteilung:
**01.12.2021 Patentblatt 2021/48**

(51) Int Cl.:
*B60G 17/016* *(2006.01)*  *G01G 19/08* *(2006.01)*
*B60G 17/018* *(2006.01)*

(21) Anmeldenummer: **19204219.0**

(22) Anmeldetag: **21.10.2019**

(54) **KRAFTFAHRZEUG UND VERFAHREN ZUR HÖHENANPASSUNG EINES HÖHENVERSTELLBAREN KRAFTFAHRZEUGS**

MOTOR VEHICLE AND METHOD FOR ADJUSTING THE HEIGHT OF A HEIGHT-ADJUSTABLE MOTOR VEHICLE

VÉHICULE AUTOMOBILE ET PROCÉDÉ D'AJUSTEMENT DE LA HAUTEUR D'UN VÉHICULE AUTOMOBILE RÉGLABLE EN HAUTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.10.2018 DE 102018127189**

(43) Veröffentlichungstag der Anmeldung:
**06.05.2020 Patentblatt 2020/19**

(73) Patentinhaber: **MAN Truck & Bus SE 80995 München (DE)**

(72) Erfinder: **Gerritzen, Ralph 82110 Germering (DE)**

(74) Vertreter: **v. Bezold & Partner Patentanwälte - PartG mbB Akademiestraße 7 80799 München (DE)**

(56) Entgegenhaltungen:
**EP-A1- 1 387 153          DE-A1- 10 148 096
DE-A1- 19 853 126        DE-A1-102015 003 590
DE-A1-102015 006 597   DE-B4- 10 330 432
FR-A1- 2 860 071          US-A1- 2018 029 432
US-B2- 8 396 627**

**Beschreibung**

Die Erfindung betrifft ein Verfahren zur Höhenanpassung eines höhenverstellbaren Kraftfahrzeugs, vorzugsweise eines Nutzfahrzeugs, und ein Kraftfahrzeug, das zum Ausführen des Verfahrens konfiguriert ist.

Die EP 2 106 937 A1 offenbart, dass bei Curtainsider-Auflieger eine maximale lichte Laderaumhöhe angestrebt wird. Dabei soll die gesetzlich vorgeschriebene, maximale Fahrzeughöhe im beladenen Zustand, wenn die Reifen des Nutzfahrzeugs einen geringeren Halbmesser als im unbeladenen Zustand aufweisen, nicht überschritten werden. Beim Entladen besteht jedoch das Problem, dass durch die Entlastung der Reifen die gesetzlich vorgeschriebene, maximale Fahrzeughöhe überschritten werden kann. Es ist daher bekannt, bei Fahrzeugen mit einer Luftfederung ein Niveauregulierungsventil vorzusehen, das mit Hilfe einer Steuereinheit die Fahrhöhe des Nutzfahrzeugs korrigiert, so dass die gesetzliche Maximalhöhe unterschritten wird. Ein Verfahren zur Änderung des Fahrniveaus bei einem Nutzfahrzeug mit einem elektronisch gesteuerten Niveauregulierungsventil beschreibt demnach beispielsweise die DE 10 2004 051 740 B4. Darin ist ein Steuerventil offenbart, das mit den Federbälgen einer Luftfederungsanlage verbunden ist. Das Steuerventil ist ferner mit einer Steuereinrichtung verbunden, die den Zeitpunkt des Öffnens und Schließens des Ventils reguliert. Dabei empfängt die Steuereinrichtung Daten, die Aufschluss über die aktuelle Fahrhöhe des Nutzfahrzeugs geben. Die Daten werden dabei von Sensoren erfasst, die das Ist-Niveau des Fahrzeugs anhand des Abstandes vom Fahrzeugrahmen zur Fahrzeugachse, der Stoßdämpferhärte, der Achslasten oder der Druckbeaufschlagung der Federbälge ermitteln.

Die DE 103 30 432 B4 offenbart ein Verfahren zur Höhenregelung für ein Fahrzeug, wobei das Gewicht des Fahrzeugaufbaus als Fahrparameter in die Höhenregelung für eine lastunabhängige Verfahrgeschwindigkeit des Fahrzeugaufbaus eingeht.

Die DE 10 2015 003590 A1 offenbart ein Verfahren zur Niveauregulierung eines Fahrzeugs. Es können Funktionseinheiten umfasst sein, die dazu dienen, Ereignisse, Objekte, Situationen und/oder Verhältnisse festzustellen, die sich auf die Niveauregulierung einschließlich der Niveauaufrechterhaltung auswirken können, wie beispielsweise Hindernisse, das aktuelle Wetter, der aktuelle Straßenzustand, die Art der Straße, Straßenunebenheiten, Brücken, der zulässige Achsendruck, das Fahrzeuggewicht, die Fahrzeuggeschwindigkeit, die Fahrzeugverzögerung, die Fahrzeugbeschleunigung, der Energieverbrauch zur Durchführung der Niveauregulierung, einschließlich des Energieverbrauchs zur Füllung und Leerung der Balgeinheiten des Luftfederungssystems und dergleichen.

Die US 2018/029432 A1 offenbart eine Fahrzeughöhenverstelleinrichtung mit Fahrzeughöhensensoren, die mit einem Aufhängungsarm verbunden sind und den Betrag der vertikalen Verschiebung zwischen dem Aufhängungsarm und der Karosserie erfassen. Zusätzlich kann ein Fahrzeughöhensensor verwendet werden, der direkt einen Abstand zu einer Fahrbahnoberfläche unter Verwendung einer Ultraschallwelle oder eines Lasers misst.

Die US 8 396 627 B2 betrifft ein Verfahren und eine Vorrichtung zum Bestimmen der Masse eines Fahrzeugs. Die Kenntnis der Masse kann dazu genutzt werden, um Beladungszustände zu erkennen, und Bremssysteme oder Reifendruckkontrollen beladungsabhängig zu parametrisieren.

Die DE 101 48 096 A1 offenbart ein Verfahren zur Ermittlung der Masse eines Kraftfahrzeugs unter Berücksichtigung unterschiedlicher Fahrsituationen mit Auswertung der jeweiligen Fahrzeug-Beschleunigung, wobei neben der Antriebskraft eines Fahrzeug-Antriebsaggregats die jeweiligen Widerstandskräfte, resultierend aus rotatorischen Kräften, aus dem Luftwiderstand, aus dem Rollwiderstand und aus der Hangabtriebskraft, berücksichtigt werden.

Die EP 1 387 153 A1 betrifft ein Verfahren und eine Vorrichtung zur Ermittlung eines die Fahrzeugmasse repräsentierenden Massenwertes aus Fahrzeugbeschleunigung ausgehend von einem erfassten Beschleunigungswert, einem erfassten Antriebswert und einem bestimmten Fahrwiderstandswert.

Der Erfindung liegt die Aufgabe zu Grunde, ein alternatives und/oder verbessertes Verfahren zur Höhenanpassung eines höhenverstellbaren Kraftfahrzeugs zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft ein Verfahren zur Höhenanpassung eines höhenverstellbaren Kraftfahrzeugs, vorzugsweise eines Nutzfahrzeugs (z. B. Lastkraftwagen, Lastkraftwagen-Gespann oder Omnibus). Das Verfahren weist ein Ermitteln einer aktuellen Masse, vorzugsweise einer aktuellen Gesamtmasse, des Kraftfahrzeugs mittels eines Masseschätzers auf. Der Masseschätzer schätzt die aktuelle Masse basierend auf mindestens einer erfassten Motorantriebskraft und mindestens einer erfassten Beschleunigung des Kraftfahrzeugs und/oder basierend auf mindestens einer erfassten Motorbremskraft und mindestens einer erfassten Verzögerungen des Kraftfahrzeugs. Das Verfahren weist ein Anpassen einer Höhe (z. B. Fahrhöhe) des Kraftfahrzeugs basierend auf der ermittelten aktuellen Masse des Kraftfahrzeugs auf.

Vorzugsweise kann durch Verwendung des Masseschätzers auf sehr einfache Weise eine aktuelle Gesamtmasse geschätzt werden, die Aufschluss über eine Höhe des Kraftfahrzeugs geben kann, da eine Eindrückung der Räder des Kraftfahrzeugs von deren Belastung abhängt. Die vom Masseschätzer verwendeten Eingangsgrößen (Beschleunigung, Verzögerung, Antriebkraft bzw. -leistung, Bremskraft bzw. -leistung) können typischerweise ohnehin für andere Zwecke erfasst werden und somit von einer Steuereinheit des Kraftfahrzeugs abrufbar sein. Zweckmäßig kann so auf zusätzliche Sensorik, die ausschließlich oder vorwiegend zur Ermittlung der Fahrthöhe des Kraftfahrzeugs verwendet wird, verzichtet werden. Damit kann zweckmäßig auf besonders einfache Weise ein Verfahren zur Höhenpassung implementiert werden, um bspw. sicherzustellen, dass eine Höhe des Kraftfahrzeugs stets eine gesetzlich vorgegebene Maximalhöhe unterschreitet.

Vorzugsweise kann der Masseschätzer bspw. als ein Algorithmus und/oder in Form von Software bspw. in einer Steuereinheit des Kraftfahrzeug gespeichert und/oder ausgeführt werden.

Zweckmäßig kann der Masseschätzer die Masse basierend auf dem mathematischen Zusammenhang Kraft = Masse * Beschleunigung schätzen.

Beispielsweise kann der Masseschätzer die aktuelle Masse basierend direkt auf der mindestens einen erfassten Motorantriebskraft und der mindestens einen erfassten Beschleunigung des Kraftfahrzeugs und/oder basierend auf der mindestens einen erfassten Motorbremskraft und der mindestens einer erfassten Verzögerungen des Kraftfahrzeugs schätzen. Zusätzlich oder alternativ ist es auch möglich, dass der Masseschätzer nicht direkt basierend auf der Motorantriebskraft, der Beschleunigung, der Motorbremskraft du/oder der Verzögerung des Kraftfahrzeugs schätzt, sondern basierend auf von diesen Größen abgeleiteten Werten, z. B. Antriebsleistung, Bremsleistung usw.

In einem Ausführungsbeispiel weist das Anpassen der Höhe ein Vergleichen der ermittelten aktuellen Masse mit einem vorbestimmten Massegrenzwert, vorzugsweise einem vorbestimmten Mindestmasse-Grenzwert, und ein Anpassen der Höhe basierend auf dem Vergleich auf. Bspw. kann so auf einfache Weise festgestellt werden, ob eine Leerfahrt oder eine annähernde Leerfahrt des Kraftfahrzeugs vorliegt.

In einem weiteren Ausführungsbeispiel weist das Anpassen der Höhe einen Vergleich der ermittelten aktuellen Masse mit lediglich einem einzigen vorbestimmten Massegrenzwert auf. Das Verfahren kann demnach einfach und robust gehalten werden.

In einer Weiterbildung ist der vorbestimmte Massegrenzwert so vorbestimmt, dass er einem im Wesentlichen beladungsfreien Zustand und/oder einer Leerfahrt des Kraftfahrzeugs entspricht. Alternativ oder zusätzlich kann der vorbestimmte Massegrenzwert so vorbestimmt sein, dass er sich auf einen Zustand des Kraftfahrzeugs bezieht, bei der im Wesentlichen kein Treibstoff und/oder andere Betriebsstoffe zum Betreiben des Kraftfahrzeugs vom Kraftfahrzeug geladen sind.

In einer Ausführungsform erfolgt bei Unterschreiten des vorbestimmten Massegrenzwerts die Anpassung der Höhe des Kraftfahrzeugs auf ein, vorzugsweise einziges, vorbestimmtes Niveau, vorzugsweise durch Absenkung eines Luftfederungssystems des Kraftfahrzeugs auf das vorbestimmte Niveau des Luftfederungssystems.

In einer weiteren Ausführungsform wird die Höhe des Kraftfahrzeugs so angepasst, dass eine gesetzliche vorgeschriebene Maximalhöhe des Kraftfahrzeugs unterschritten wird und/oder eine Höhenvergrößerung des Kraftfahrzeugs aufgrund eines vergrößerten masseabhängigen Reifenhalbmessers der Räder des Kraftfahrzeugs bei einer Leerfahrt zumindest kompensiert wird.

Zweckmäßig kann das vorbestimmte Niveau so vorbestimmt sein, dass selbst bei einer Leerfahrt des Kraftfahrzeugs, bei der bspw. zusätzlich im Wesentlichen kein Treibstoff im Tank des Kraftfahrzeugs ist, die gesetzliche vorgeschriebene Maximalhöhe des Kraftfahrzeugs unterschritten wird.

Vorzugsweise kann der Massegrenzwert so vorbestimmt sein, dass auch noch bei vergleichsweise geringer Beladung (z. B. bis zu 20 % der Ladekapazität) des Kraftfahrzeugs, bei der bspw. auch kaum Treibstoff im Tank des Kraftfahrzeugs ist, die gesetzliche vorgeschriebene Maximalhöhe des Kraftfahrzeugs unterschritten wird.

In einer Ausführungsvariante schätzt der Masseschätzer iterativ, vorzugsweise basierend auf mehreren nacheinander erfolgten Beschleunigungen und/oder Verzögerungen des Kraftfahrzeugs.

In einer weiteren Ausführungsvariante weist das Verfahren ferner ein Ermitteln eines Schwerpunkts des Kraftfahrzeugs auf, vorzugsweise mittels Schätzung durch den Masseschätzer, wobei das Anpassen der Höhe des Kraftfahrzeugs zusätzlich auf dem ermittelten Schwerpunkt basiert.

In einem Ausführungsbeispiel erfolgt das Anpassen der Höhe mittels eines Luftfederungssystems des Kraftfahrzeugs.

Alternativ oder zusätzlich kann das Anpassen der Höhe bspw. mittels eines höhenverstellbaren Dachs eines Ladeaufbaus, eines Anhängers und/oder eines Sattelaufliegers des Kraftfahrzeugs erfolgen.

In einem weiteren Ausführungsbeispiel erfolgt das Ermitteln der aktuellen Masse und/oder das Anpassen der Höhe automatisch. Damit muss bspw. ein Fahrer des Kraftfahrzeugs nicht gesondert einen Schalter vor oder bei einer Leerfahrt des Kraftfahrzeugs betätigen.

In einer Ausführungsform wird die aktuelle Masse zusätzlich mittels einer Messung mindestens eines Drucksensors, der zum Messen eines Drucks eines Luftfederbalgs eines Luftfederungssystems des Kraftfahrzeugs angeordnet ist, ermittelt oder ist entsprechend ermittelbar. Damit kann bspw. eine Genauigkeit der Ermittlung der aktuellen Masse

3

erhöht und/oder die Schätzung des Masseschätzers plausibilisiert werden.

Die Erfindung bezieht sich auch auf ein Kraftfahrzeug, vorzugsweise ein Nutzfahrzeug (z. B. Omnibus, Lastkraftwagen oder Lastkraftwagen-Gespann bspw. mit Anhänger und/oder Sattelauflieger). Das Kraftfahrzeug weist eine Vorrichtung zur Anpassung der Höhe des Kraftfahrzeugs und eine Steuereinheit (z. B. Zentralsteuereinheit oder Luftfederungssystem-Steuereinheit) auf, die zum Ausführen eines Verfahrens wie hierin offenbart konfiguriert ist.

In einem Ausführungsbeispiel weist das Kraftfahrzeug einen vollluftgefederter Lastkraftwagen oder Omnibus auf.

In einem weiteren Ausführungsbeispiel weist das Kraftfahrzeug ein teilluftgefedertes Sattelzugfahrzeug auf, das vorzugsweise eine oder mehrere luftgefederte Hinterachsen aufweist.

In einer Ausführungsform weist das Kraftfahrzeug einen vollluftgefederten Anhänger und/oder Sattelauflieger auf, dessen Höhe ebenfalls mittels der Steuereinheit oder einer weiteren Steuereinheit, die zum Ausführen des Verfahrens wie hierin offenbart konfiguriert ist, anpassbar ist.

Wie hierin verwendet kann sich der Begriff "Steuereinheit" vorzugsweise auf eine Elektronik und/oder mechanische Steuerung beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

Figur 1    eine schematische Ansicht eines Kraftfahrzeugs gemäß der vorliegenden Offenbarung in drei unterschiedlichen Situationen; und

Figur 2    ein Ablaufdiagramm eines beispielhaften Verfahrens gemäß der vorliegenden Offenbarung.

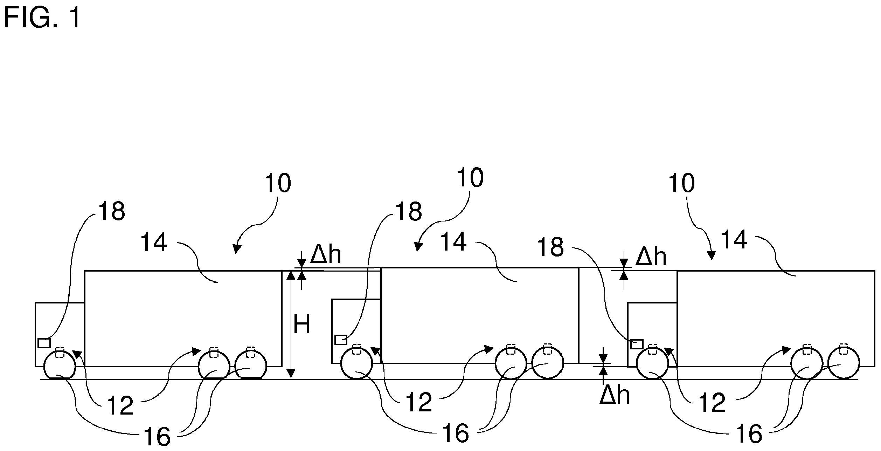

Die Figur 1 zeigt ein Kraftfahrzeug 10 in drei unterschiedlichen Situationen. Das Kraftfahrzeug 10 ist zweckmäßig als ein Nutzfahrzeug, vorzugsweise ein Lastkraftwagen (wie dargestellt ist) oder ein Omnibus, ausgeführt.

Das Kraftfahrzeug 10 weist zweckmäßig ein Luftfederungssystem 12 auf. Das Luftfederungssystem 12 kann ein elektronisch geregeltes Luftfederungssystem sein. Das Luftfederungssystem 12 kann beispielsweise eine Mehrzahl von Luftfederbälgen aufweisen, wie dargestellt ist. Das Luftfederungssystem 12 ermöglicht eine Höhenanpassung des Kraftfahrzeugs 10. Insbesondere kann durch Zuführen von Druckluft zu den Luftfederbälgen des Luftfederungssystems 12 eine Höhe des Kraftfahrzeugs 10 vergrößert werden. Andererseits kann durch Ablassen von Druckluft aus den Luftfederbälgen des Luftfederungssystems 12 eine Höhe des Kraftfahrzeugs 10 verringert werden.

Das Luftfederungssystem 12 kann sowohl an einer Vorderachse als auch an einer Hinterachse des Kraftfahrzeugs 10 angeordnet sein, sodass das Kraftfahrzeug 10 ein vollluftgefedertes Kraftfahrzeug ist. Es ist allerdings auch möglich, dass das Luftfederungssystem 12 beispielsweise lediglich an einer oder mehreren Hinterachsen des Kraftfahrzeugs 10 angeordnet ist, sodass das Kraftfahrzeug 10 ein teilluftgefedertes Kraftfahrzeug ist. Beispielsweise kann das Kraftfahrzeug 10 in dieser teilluftgefederten Konfiguration als ein Sattelzugfahrzeug für einen Sattelauflieger ausgebildet sein. Es ist auch möglich, dass das Kraftfahrzeug 10 zusätzlich einen Anhänger oder Sattelauflieger aufweist und das Luftfederungssystem 12 auch an einer Vorderachse und/oder einer Hinterachse des Anhängers oder Sattelaufliegers angeordnet ist.

Das Luftfederungssystem 12 kann weitere, nicht im Detail in Figur 1 dargestellte Komponenten aufweisen. Bspw. kann das Luftfederungssystem 12 einen Luftverdichter (z. B. Kolbenverdichter) zum Bereitstellen von Druckluft aufweisen. Vorzugsweise kann das Luftfederungssystem 12 eine Vorrichtung zur Druckluftaufbereitung zum Filtern, Kühlen und/oder Trocknen der Druckluft aufweisen. Zweckmäßig kann die Vorrichtung zur Druckluftaufbereitung stromabwärts des Luftverdichters angeordnet sein. Beispielsweise kann das Luftfederungssystem 12 einen Drucklufttank zum Speichern von Druckluft und Zuführen der gespeicherten Druckluft zu den Luftfederbälgen des Luftfederungssystems 12 aufweisen. Vorzugsweise kann der Drucklufttank stromabwärts des Luftverdichters und/oder stromabwärts der Vorrichtung zu Druckluftaufbereitung angeordnet sein.

Zusätzlich kann das Luftfederungssystem 12 Ventile aufweisen, mit denen eine Zufuhr von Druckluft zu den Luftfederbälgen und eine Abfuhr von Druckluft aus den Luftfederbälgen steuerbar sind. Zum Betätigen der Ventile kann das Luftfederungssystem 12 beispielsweise eine Steuereinheit 18 aufweisen. Die Steuereinheit 18 kann dazu konfiguriert sein, ein Verfahren zum Höhenanpassen eines Kraftfahrzeugs wie hierin offenbart auszuführen.

In der in Figur 1 links dargestellten Situation ist ein Ladeaufbau 14 des Kraftfahrzeugs 10 beladen. Durch die vergleichsweise hohe Gesamtmasse (zum Beispiel m = 18 t) des Kraftfahrzeugs 10 sind die Räder 16 des Kraftfahrzeugs 10 leicht eingedrückt, zum Beispiel um ca. 20 mm oder weniger.

In der in Figur 1 mittig dargestellten Situation ist der Ladeaufbau 14 des Kraftfahrzeugs 10 nicht beladen. Durch die vergleichsweise geringe Gesamtmasse (zum Beispiel m < 5 t) des Kraftfahrzeugs 10 sind die Räder 16 des Kraftfahrzeugs 10 nicht eingedrückt. Das in Figur 1 mittig dargestellte Kraftfahrzeug 10 kann damit um den Betrag Δh höher als das in Figur 1 links dargestellte Kraftfahrzeug 10 sein, um den die Räder 16 beim linken Kraftfahrzeug 10 eingedrückt sind.

Es ist möglich, dass eine beispielsweise gesetzlich vorgeschriebene Maximalhöhe H für das Kraftfahrzeug 10 existiert. Während das vollbeladene Kraftfahrzeug 10 auf der linken Seite in Figur 1 diese Maximalhöhe H aufgrund der eingedrückten Räder 16 nicht überschreitet, überschreitet das beladungsfreie Kraftfahrzeug 10, das mittig in Figur 1 dargestellt ist, diese Maximalhöhe H.

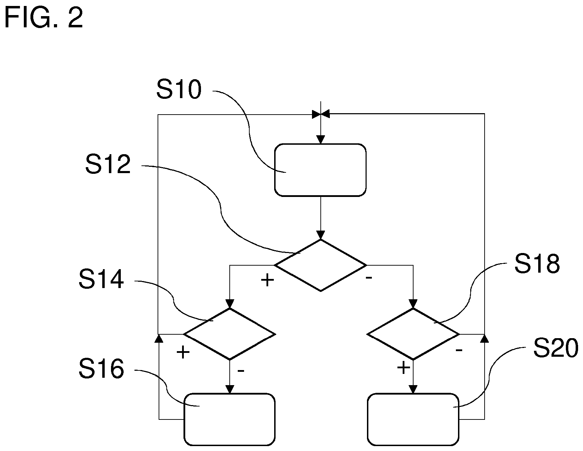

Um zu verhindern, dass das Kraftfahrzeug 10 bei einer Leerfahrt die Maximalhöhe H überschreitet, ist hierin ein beispielhaftes Verfahren zur Höhenanpassung eines Kraftfahrzeugs offenbart. Nachfolgend ist das Verfahren unter Bezugnahme auf die Figuren 1 und 2 beschrieben.

In einem Schritt S10 wird eine aktuelle Masse des Kraftfahrzeugs 10, zum Beispiel eine Gesamtmasse oder eine Beladungsmasse, ermittelt. Auf besonders einfache Weise kann die Masse im Schritt S10 mittels eines Masseschätzers geschätzt werden. Der Masseschätzer kann ein Funktionsprogramm oder ein Algorithmus sein, das oder der beispielsweise von der Steuereinheit 18 ausgeführt wird. Der Masseschätzer ist dazu ausgebildet, eine aktuelle Masse des Kraftfahrzeugs 10 basierend auf einer oder mehreren nacheinander erfassten Beschleunigungen und/oder Verzögerungen des Kraftfahrzeugs 10 zu schätzen. Hierfür kann beispielsweise eine ebenfalls erfasste Motorantriebskraft des Kraftfahrzeugs 10 ins Verhältnis zu der oder den erfasste(n) Beschleunigung(en) und/oder Verzögerung(en) gesetzt werden, gemäß dem Zusammenhang Kraft = Masse * Beschleunigung ($F = m*a$).

Die Verwendung des Masseschätzers ermöglicht auf besonders einfache Weise, die Masse des Kraftfahrzeugs 10 zu ermitteln, zweckmäßig ohne dass hierfür zusätzliche Bauteile am Kraftfahrzeug 10 vorgesehen sein müssen. Es ist möglich, dass der Masseschätzer iterativ arbeitet. Der Masseschätzer kann mehrere Werte für Beschleunigung(en) und/oder Verzögerung(en) des Kraftfahrzeugs 10 in Relation zu den jeweiligen Motorantriebs- bzw. Motorbremskräften setzen, um die Schätzung der Masse des Kraftfahrzeugs 10 iterativ zu verbessern. Es ist möglich, dass der Masseschätzer 10 vor Inbetriebnahme des Kraftfahrzeugs 10 die Masse des Kraftfahrzeugs 10 unter Berücksichtigung von vorbestimmten Default- bzw. Standardwerten schätzt.

Es ist auch möglich, dass die Schätzung durch den Masseschätzer durch die Erfassung weiterer Parameter im oder am Kraftfahrzeug 10 plausibilisiert und/oder sogar verbessert wird. Beispielsweise könnte das Luftfederungssystem 12 zusätzliche Drucksensoren aufweisen, die dazu angeordnet sind, einen Druck der Luftfederbälge zu erfassen. Die Masse des Kraftfahrzeugs 10 könnte somit zusätzlich basierend auf Druckmessungen der Drucksensoren ermittelt werden.

In einem Schritt S12 kann die ermittelte Masse des Kraftfahrzeugs 10 mit einem vorbestimmten Grenzwert, zum Beispiel einer Mindestmasse, verglichen werden. Der Grenzwert ist beispielsweise so gewählt, dass eine (annähernde) Leerfahrt, das heißt eine Fahrt des Kraftfahrzeugs 10 ohne (nennenswerte) Beladung, sicher erkannt wird. In anderen Worten kann der Grenzwert so gewählt werden, dass die mittig in Figur 1 dargestellte Situation, bei der es mangels Eindrückung der Räder 16 zum Überschreiten der gesetzlich zulässigen Maximalhöhe H um den Betrag Δh kommt, sicher erkannt wird. Beispielsweise kann der Grenzwert für eine Gesamtmasse bei einem Lastkraftwagen im Bereich von 5 t ± z. B. 25 % oder bezüglich einer Gesamtachslast bei 1 t ± z. B. 25 % liegen. Zweckmäßig kann im Schritt S12 somit erkannt werden, ob das Kraftfahrzeug 10 beladen oder leer ist.

Es ist möglich, dass sich durch die Verwendung lediglich eines einzigen Grenzwertes das Verfahren und somit deren Implementation in der Praxis weiter vereinfacht.

Wird im Schritt S12 eine Unterschreitung des Grenzwerts erkannt (+), fährt das Verfahren mit einem Schritt S14 fort. Wird im Schritt S12 hingegen keine Unterschreitung des Grenzwerts erkannt (-), wird das Verfahren mit einem Schritt S18 fortgesetzt.

In den Schritten S14 und S18 kann beispielsweise geprüft werden, ob das Luftfederungssystem 12 bereits auf einem vorbestimmten abgesenkten Niveau eingestellt ist (+) oder nicht (-).

Wird im Schritt S14 erkannt, dass das Luftfederungssystem 12 bereits auf dem abgesenkten Niveau eingestellt ist (+), kann davon ausgegangen werden, dass das Kraftfahrzeug 10 die zulässige Maximalhöhe H bereits unterschreitet, entsprechend der in Figur 1 auf der rechten Seite dargestellten Situation. Das Verfahren kann dann beispielsweise zurück zum Schritt S10 springen.

Wird im Schritt S14 erkannt, dass das Luftfederungssystem 12 noch nicht auf dem abgesenkten Niveau eingestellt ist (-), kann das Verfahren mit einem Schritt S16 fortgesetzt werden.

Im Schritt S16 wird das Luftfederungssystem 12 automatisch auf das vorbestimmte abgesenkte Niveau abgesenkt. Das abgesenkte Niveau kann dabei so vorbestimmt sein, dass selbst bei einem vollkommen unbeladenen Kraftfahrzeug 10 die gesetzliche Maximalhöhe H unterschritten wird. In anderen Worten wird im Schritt S 6 eine Höhenanpassung des Kraftfahrzeugs 10 vorgenommen, entsprechend einer Veränderung des Kraftfahrzeugs 10 von der in Figur 1 mittig dargestellten Situation zu der in Figur 1 auf der rechten Seite dargestellten Situation. Zweckmäßig ist es für die automatische Absenkung gemäß Schritt S16 nicht erforderlich, dass beispielsweise ein Fahrer des Kraftfahrzeugs 10 gesondert einen Schalter zum Absenken betätigt. Nach dem Durchführen des Schritts S16 kann das Verfahren beispielsweise zurück zum Schritt S10 springen.

Wird im Schritt S18 erkannt, dass das Luftfederungssystem 12 nicht auf dem abgesenkten Niveau eingestellt ist (-), kann davon ausgegangen werden, dass das Kraftfahrzeug 10 aktuell die zulässige Maximalhöhe H bereits unterschreitet, entsprechend der in Figur 1 auf der linken Seite dargestellten Situation. Das Verfahren kann beispielsweise zurück zum Schritt S10 springen.

Wird im Schritt S18 erkannt, dass das Luftfederungssystem 12 bereits auf dem abgesenkten Niveau eingestellt ist (+), kann davon ausgegangen werden, dass das Luftfederungssystem 10 nicht länger auf dem abgesenkten Niveau gehalten werden muss, um die zulässige Maximalhöhe H zu unterschreiten. Entsprechend kann das Luftfederungssystem 12 in einem Schritt S20 eine Höhe des Kraftfahrzeugs 10 erhöhen, ohne dass die gesetzlich vorgeschriebene Maximalhöhe H überschritten wird (siehe Situation auf der linken Seite in Figur 1). Nach dem Ausführen des Schritts S20 kann das Verfahren dann beispielsweise zurück zum Schritt S10 springen.

Auch wenn hierin das besonders bevorzugten Ausführungsbeispiel mit dem Luftfederungssystem 12 zur Höhenanpassung des höhenverstellbaren Kraftfahrzeugs 10 beschrieben ist, wird darauf hingewiesen, dass auch alternative und/oder zusätzliche Vorrichtungen zur Höhenanpassung des Kraftfahrzeugs 10 entsprechend dem hierin offenbarte Verfahren verwendet werden können. Zum Beispiel kann der Ladeaufbau 14 des Kraftfahrzeugs 10 und/oder ein Anhänger ein höhenverstellbares Dach aufweisen, um bspw. einen maximalen Laderaum zu ermöglichen.

Es ist auch möglich, dass bspw. in einem komplexeren Verfahren zur Höhenanpassung der Masseschätzer zusätzlich einen Schwerpunkt des Kraftfahrzeugs 10 schätzt, z. B. über eine Kenntnis des Schwerpunkts des Kraftfahrzeugs 10 im beladungsfreien Zustand. Zusätzlich oder alternativ können die Messungen von ggf. vorhandene Drucksensoren des Luftfederungssystems 12 auch dazu verwendet werden, den Schwerpunkt des Kraftfahrzeugs 10 zu ermitteln. Die Höhenanpassung des Kraftfahrzeugs 10 kann dann bspw. auch basierend auf dem ermittelten Schwerpunkt vorgenommen werden. Bspw. kann bestimmt werden, dass lediglich die Luftfederbälge der Hinterachse des Kraftfahrzeugs 10 oder nur die Luftfederbälge der Hinterachse auf der rechten Fahrzeugseite des Kraftfahrzeugs 10 höhenangepasst werden müssen.

## Bezugszeichenliste

| | |
|---|---|
| 10 | Kraftfahrzeug |
| 12 | Luftfederungssystem |
| 14 | Ladeaufbau |
| 16 | Räder |
| 18 | Steuereinheit |

| | |
|---|---|
| H | gesetzlich vorgeschriebene Maximalhöhe |
| $\Delta h$ | Höhendifferenz |

## Patentansprüche

1. Verfahren zur Höhenanpassung eines höhenverstellbaren Kraftfahrzeugs (10), vorzugsweise eines Nutzfahrzeugs, aufweisend:

   Ermitteln einer aktuellen Masse, vorzugsweise einer aktuellen Gesamtmasse, des Kraftfahrzeugs (10) mittels eines Masseschätzers, der die aktuelle Masse basierend auf mindestens einer erfassten Motorantriebskraft und mindestens einer erfassten Beschleunigung des Kraftfahrzeugs (10) und/oder basierend auf mindestens einer erfassten Motorbremskraft und mindestens einer erfassten Verzögerungen des Kraftfahrzeugs (10) schätzt; und

   Anpassen einer Höhe des Kraftfahrzeugs (10) basierend auf der ermittelten aktuellen Masse des Kraftfahrzeugs (10).

2. Verfahren nach Anspruch 1, wobei das Anpassen der Höhe aufweist:

   Vergleichen der ermittelten aktuellen Masse mit einem vorbestimmten Massegrenzwert, vorzugsweise einem vorbestimmten Mindestmasse-Grenzwert; und
   Anpassen der Höhe basierend auf dem Vergleich.

**3.** Verfahren nach Anspruch 1 oder Anspruch 2, wobei:
das Anpassen der Höhe einen Vergleich der aktuellen Masse mit lediglich einem einzigen vorbestimmten Massegrenzwert aufweist.

**4.** Verfahren nach Anspruch 2 oder Anspruch 3, wobei:

der vorbestimmte Massegrenzwert so vorbestimmt ist, dass er einem im Wesentlichen beladungsfreien Zustand und/oder einer Leerfahrt des Kraftfahrzeugs (10) entspricht; und/oder
der vorbestimmte Massegrenzwert so vorbestimmt ist, dass er sich auf einen Zustand des Kraftfahrzeugs (10) bezieht, bei der im Wesentlichen kein Treibstoff und/oder andere Betriebsstoffe zum Betreiben des Kraftfahrzeugs (10) vom Kraftfahrzeug (10) geladen sind.

**5.** Verfahren nach einem der Ansprüche 2 bis 4, wobei:

bei Unterschreiten des vorbestimmten Massegrenzwerts die Anpassung der Höhe des Kraftfahrzeugs (10) auf ein, vorzugsweise einziges, vorbestimmtes Niveau erfolgt, vorzugsweise durch Absenkung eines Luftfederungssystems (12) des Kraftfahrzeugs (10) auf das vorbestimmte Niveau des Luftfederungssystems (12).

**6.** Verfahren nach einem der vorherigen Ansprüche, wobei:

die Höhe des Kraftfahrzeugs (10) so angepasst wird, dass eine gesetzliche vorgeschriebene Maximalhöhe (H) des Kraftfahrzeugs (10) unterschritten wird; und/oder
die Höhe des Kraftfahrzeugs (10) so angepasst wird, dass eine Höhenvergrößerung ($\Delta$h) des Kraftfahrzeugs (10) aufgrund eines vergrößerten masseabhängigen Reifenhalbmessers der Räder (16) des Kraftfahrzeugs (10) bei einer Leerfahrt zumindest kompensiert wird.

**7.** Verfahren nach einem der vorherigen Ansprüche, wobei:
der Masseschätzer iterativ schätzt, vorzugsweise basierend auf mehreren nacheinander erfolgten Beschleunigungen und/oder Verzögerungen des Kraftfahrzeugs (10).

**8.** Verfahren nach einem der vorherigen Ansprüche, ferner aufweisend:

Ermitteln eines Schwerpunkts des Kraftfahrzeugs (10), vorzugsweise mittels Schätzung durch den Masseschätzer,
wobei das Anpassen der Höhe des Kraftfahrzeugs (10) zusätzlich auf dem ermittelten Schwerpunkt basiert.

**9.** Verfahren nach einem der vorherigen Ansprüche, wobei:
das Anpassen der Höhe mittels eines Luftfederungssystems (12) des Kraftfahrzeugs (10) erfolgt.

**10.** Verfahren nach einem der vorherigen Ansprüche, wobei:
das Anpassen der Höhe mittels eines höhenverstellbaren Dachs eines Ladeaufbaus (16), eines Anhängers und/oder eines Sattelaufliegers des Kraftfahrzeugs (10) erfolgt.

**11.** Verfahren nach einem der vorherigen Ansprüche, wobei:
das Ermitteln der aktuellen Masse und/oder das Anpassen der Höhe automatisch erfolgt.

**12.** Verfahren nach einem der vorherigen Ansprüche, wobei:
die aktuelle Masse zusätzlich mittels einer Messung mindestens eines Drucksensors, der zum Messen eines Drucks eines Luftfederbalgs eines Luftfederungssystems (12) des Kraftfahrzeugs (10) angeordnet ist, ermittelt wird oder ermittelbar ist.

**13.** Kraftfahrzeug (10), vorzugsweise Nutzfahrzeug, mit einer Vorrichtung zur Anpassung der Höhe des Kraftfahrzeugs und einer Steuereinheit (18), die zum Ausführen eines Verfahrens nach einem der vorherigen Ansprüche konfiguriert ist.

**14.** Kraftfahrzeug (10) nach Anspruch 13, wobei:

das Kraftfahrzeug (10) einen vollluftgefederter Lastkraftwagen oder Omnibus aufweist; oder

das Kraftfahrzeug (10) ein teilluftgefedertes Sattzugfahrzeug aufweist, das vorzugsweise eine oder mehrere luftgefederte Hinterachsen aufweist.

15. Kraftfahrzeug (10) nach Anspruch 13 oder Anspruch 14, wobei
das Kraftfahrzeug (10) einen vollluftgefederten Anhänger und/oder Sattelauflieger aufweist, dessen Höhe ebenfalls mittels der Steuereinheit (18) oder einer weiteren Steuereinheit, die zum Ausführen des Verfahrens nach einem der Ansprüche 1 bis 12 konfiguriert ist, anpassbar ist.


**Claims**

1. A method for adjusting the height of a height-adjustable motor vehicle (10), preferably a commercial vehicle, comprising:
determining a current mass, preferably a current total mass, of the motor vehicle (10) by means of a mass estimator which estimates the current mass on the basis of at least one detected motor drive force and at least one detected acceleration of the motor vehicle (10) and/or on the basis of at least one detected motor braking force and at least one detected deceleration of the motor vehicle (10); and adapting a height of the motor vehicle (10) on the basis of the determined current mass of the motor vehicle (10).

2. The method according to Claim 1, wherein the adaptation of the height comprises:
comparing the determined current mass with a predetermined mass limit value, preferably a predetermined minimum mass limit value; and adapting the height on the basis of the comparison.

3. The method according to Claim 1 or Claim 2, wherein: the adaptation of the height comprises comparing the current mass with only one single predetermined mass limit value.

4. The method according to Claim 2 or Claim 3, wherein:

the predetermined mass limit value is predetermined in such a manner that it corresponds to a substantially load-free state and/or to an empty journey of the motor vehicle (10); and/or
the predetermined mass limit value is predetermined in such a manner that it relates to a state of the motor vehicle (10) in which the motor vehicle (10) is essentially not loaded with any fuel and/or other working fluids for operating the motor vehicle (10).

5. The method according to one of Claims 2 to 4, wherein:
if the value falls short of the predetermined mass limit value, the height of the motor vehicle (10) is adapted to a, preferably single, predetermined level, preferably by lowering of an air suspension system (12) of the motor vehicle (10) to the predetermined level of the air suspension system (12) .

6. The method according to one of the preceding claims, wherein:

the height of the motor vehicle (10) is adapted in such a manner that the height falls short of a legal prescribed maximum height (H) of the motor vehicle (10); and/or
the height of the motor vehicle (10) is adapted in such a manner that a height increase ($\Delta h$) of the motor vehicle (10) because of an increased mass-dependent tyre radius of the wheels (16) of the motor vehicle (10) during an empty journey is at least compensated for.

7. The method according to one of the preceding claims, wherein:
the mass estimator estimates iteratively, preferably on the basis of a plurality of successive accelerations and/or decelerations of the motor vehicle (10).

8. The method according to one of the preceding claims, furthermore comprising:

determining a centre of gravity of the motor vehicle (10), preferably by estimation by the mass estimator, wherein the adaptation of the height of the motor vehicle (10) is additionally based on the determined centre of gravity.

9. The method according to one of the preceding claims, wherein:

the height is adapted by means of an air suspension system (12) of the motor vehicle (10).

10. The method according to one of the preceding claims, wherein:
the height is adapted by means of a height-adjustable roof of a loading structure (16), of a trailer and/or a semitrailer of the motor vehicle (10) .

11. The method according to one of the preceding claims, wherein:
the determining of the current mass and/or the adapting of the height take/takes place automatically.

12. The method according to one of the preceding claims, wherein:
the current mass is additionally determined or determinable by means of a measurement of at least one pressure sensor which is arranged for measuring a pressure of an air bellows of an air suspension system (12) of the motor vehicle (10).

13. A motor vehicle (10), preferably commercial vehicle, having a device for adapting the height of the motor vehicle, and a control unit (18) which is configured for carrying out a method according to one of the preceding claims.

14. The motor vehicle (10) according to Claim 13, wherein:

the motor vehicle (10) comprises a lorry or bus with full air suspension; or
the motor vehicle (10) comprises an articulated vehicle with partial air suspension and which preferably has one or more air-sprung rear axles.

15. The motor vehicle (10) according to Claim 13 or Claim 14, wherein:
the motor vehicle (10) comprises a trailer and/or semitrailer with full air suspension, the height of which is likewise adaptable by means of the control unit (18) or by means of a further control unit which is configured for carrying out the method according to one of Claims 1 to 12.


**Revendications**

1. Procédé d'ajustement de la hauteur d'un véhicule automobile réglable en hauteur (10), de préférence d'un véhicule utilitaire, présentant les étapes consistant à :

établir une masse actuelle, de préférence une masse totale actuelle, du véhicule automobile (10) au moyen d'un dispositif d'estimation de masse qui estime la masse actuelle sur la base d'au moins une force d'entraînement de moteur détectée et d'au moins une accélération détectée du véhicule automobile (10) et/ou sur la base d'au moins une force de frein moteur détectée et d'au moins une décélération détectée du véhicule automobile (10) ; et
ajuster une hauteur du véhicule automobile (10) sur la base de la masse actuelle établie du véhicule automobile (10).

2. Procédé selon la revendication 1, l'ajustement de la hauteur présentant :

la comparaison de la masse actuelle établie avec une valeur limite de masse prédéterminée, de préférence avec une valeur limite de masse minimale prédéterminée ; et
l'ajustement de la hauteur sur la base de la comparaison.

3. Procédé selon la revendication 1 ou 2, dans lequel :
l'ajustement de la hauteur présente une comparaison de la masse actuelle avec uniquement une seule valeur limite de masse prédéterminée.

4. Procédé selon la revendication 2 ou 3, dans lequel :

la valeur limite de masse prédéterminée est prédéterminée de telle sorte qu'elle correspond à un état substantiellement sans charge et/ou à un trajet à vide du véhicule automobile (10) ; et/ou
la valeur limite de masse prédéterminée est prédéterminée de telle sorte qu'elle fait référence à un état du véhicule automobile (10) dans lequel substantiellement aucun combustible et/ou aucun autre carburant pour faire fonctionner le véhicule automobile (10) ne sont chargés sur le véhicule automobile (10).

5. Procédé selon l'une quelconque des revendications 2 à 4, dans lequel :
en cas de soupassement de la valeur limite de masse prédéterminée, l'ajustement de la hauteur du véhicule automobile (10) est effectué sur un niveau prédéterminé, de préférence sur un seul niveau, de préférence par l'abaissement d'un système de suspension pneumatique (12) du véhicule automobile (10) sur le niveau prédéterminé du système de suspension pneumatique (12).

6. Procédé selon l'une quelconque des revendications précédentes, dans lequel :

la hauteur du véhicule automobile (10) est ajustée de façon à être inférieure à une hauteur maximale (H) du véhicule automobile (10) requise par la loi ; et/ou
la hauteur du véhicule automobile (10) est ajustée de telle sorte qu'une augmentation de hauteur (Δh) du véhicule automobile (10) en raison d'un demi-diamètre de pneu accru, dépendant de la masse, des roues (16) du véhicule automobile (10) peut être au moins compensée en cas de trajet à vide.

7. Procédé selon l'une quelconque des revendications précédentes, dans lequel :
le dispositif d'estimation de masse estime de manière itérative, de préférence sur la base de plusieurs accélérations et/ou décélérations du véhicule automobile (10), effectuées les unes après les autres.

8. Procédé selon l'une quelconque des revendications précédentes, présentant en outre :

l'établissement d'un centre de gravité du véhicule automobile (10), de préférence au moyen d'une estimation par le dispositif d'estimation de masse,
l'ajustement de la hauteur du véhicule automobile (10) étant en outre basé sur le centre de gravité établi.

9. Procédé selon l'une quelconque des revendications précédentes, dans lequel :
l'ajustement de la hauteur est effectué au moyen d'un système de suspension pneumatique (12) du véhicule automobile (10).

10. Procédé selon l'une quelconque des revendications précédentes, dans lequel :
l'ajustement de la hauteur est effectué au moyen d'un toit réglable en hauteur d'une structure de chargement (16), d'une remorque et/ou d'une semi-remorque du véhicule automobile (10).

11. Procédé selon l'une quelconque des revendications précédentes, dans lequel :
l'établissement de la masse actuelle et/ou l'ajustement de la hauteur sont effectués automatiquement.

12. Procédé selon l'une quelconque des revendications précédentes, dans lequel :
la masse actuelle est ou peut être établie en outre au moyen d'une mesure d'au moins un capteur de pression qui est disposé pour mesurer une pression d'un ressort pneumatique d'un système de suspension pneumatique (12) du véhicule automobile (10).

13. Véhicule automobile (10), de préférence véhicule utilitaire, comprenant un dispositif d'ajustement de la hauteur du véhicule automobile et une unité de commande (18) qui est configurée pour effectuer un procédé selon l'une quelconque des revendications précédentes.

14. Véhicule automobile (10) selon la revendication 13,

le véhicule automobile (10) présentant un camion ou un bus à suspension pneumatique intégrale ; ou
le véhicule automobile (10) présentant un tracteur de semi-remorque à suspension pneumatique partielle qui présente de préférence un ou plusieurs essieux arrière à suspension pneumatique.

15. Véhicule automobile (10) selon la revendication 13 ou 14,
le véhicule automobile (10) présentant une remorque et/ou une semi-remorque à suspension pneumatique intégrale dont la hauteur est également ajustable au moyen de l'unité de commande (18) ou d'une autre unité de commande qui est configurée pour effectuer le procédé selon l'une quelconque des revendications 1 à 12.

FIG. 1

EP 3 647 085 B1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2106937 A1
- DE 102004051740 B4
- DE 10330432 B4
- DE 102015003590 A1
- US 2018029432 A1
- US 8396627 B2
- DE 10148096 A1
- EP 1387153 A1